# EUROPEAN PATENT APPLICATION

(11) **EP 3 584 762 A1**
(43) Date of publication of application: **25.12.2019**
(21) Application number: 18755013.2
(22) Date of filing: 13.02.2018
(51) Int. Cl.: G06T 7/00, G06Q 50/10

(54) **SEQUENCE MANAGEMENT SYSTEM, SEQUENCE MANAGEMENT DEVICE, AND PROGRAM**

(30) Priority: 16.02.2017 JP 2017026748
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2018/004771
(87) International publication number: WO 2018/151062

(57) **Abstract**

The purpose of the present invention is to be able to check on a queuing situation smoothly without using a receipt number issued at the time of queue registration. A queue management system (1000) configured to manage a queue of users waiting their turn at a facility includes: a registration acceptance unit (120) which accepts a queue registration at the facility; a waiting list storage unit (110) which holds information on a queuing situation of a registered group waiting their turn; a face image acquisition unit (240) which acquires a face image of a user whose turn is registered in a queue upon the queue registration; a face image information management unit (120) which extracts face image feature information from the face image, and manages the extracted information in association with information of the user whose turn is registered in the queue; a user identification unit (120) which acquires a face image of a user who makes an inquiry about the queuing situation to check the face image of the user against all face images managed in association with information of users in the queue in order to identify the user; and a queuing situation presenting unit (120) which presents information on the queuing situation to the identified user.

## Description

### Cross-Reference to Related Application

This application is based on Japanese Patent Application No. 2017-26748, filed on February 16, 2017, which is incorporated by reference in the description here.

### Technical Field

The present invention relates to a queue management system, a queue management device, and a program.

### Background Art

Conventionally, various queue management systems have been adopted at restaurants, stores, clinics, banks, government offices, and the like to manage a queue of customers waiting their turn for the services.

For example, Patent Document 1 discloses a reservation management system configured to provide reservation management services simultaneously to a plurality of facilities at which people can wait their turn, where it is described that a user can make a queue reservation on the Web, by phone, or from an in-store terminal.

### Citation List

### Patent Document

Patent Document 1: Japanese Patent Application Laid-Open No. 2005-50002

### Summary

### Technical Problem

In the conventional queue management systems, each user has been required to enter information such as a name and contact information each time the user registers a queue at each of the plurality of facilities. Further, when checking on information such as a waiting time, the user has referred to the information by using a receipt number issued at the time of registration.

The present invention has been made in view of the above-described circumstances, and it is one object thereof to be able to check on a queuing situation smoothly without using a receipt number issued at the time of queue registration.

### Solution to Problem

A queue management system according to one embodiment of the present invention is a queue management system configured to manage a queue of users waiting their turn at a facility, including:
a registration acceptance unit which accepts a queue registration at the facility;
a waiting list storage unit which holds information on a queuing situation of a registered group waiting their turn;
a face image acquisition unit which acquires a face image of a user whose turn is registered in a queue upon the queue registration;
a face image information management unit which extracts face image feature information from the face image, and manages the extracted information in association with information of the user whose turn is registered in the queue;
a user identification unit which acquires a face image of a user who makes an inquiry about the queuing situation to check the face image of the user against all face images managed in association with information of users in the queue in order to identify the user; and
a queuing situation presenting unit which presents information on the queuing situation to the identified user.

When a face image of a user whose turn is to be newly registered is registered in association with information of the user whose turn has been registered in the past, the registration acceptance unit may register a new queue using the information of the user.

The queue management system may also be configured to further include a clothing information management unit which acquires clothing information of a user whose turn is registered in the queue upon the queue registration, and manages the clothing information in association with information of the user, wherein upon inquiry about the queuing situation on the same day as the clothing information was registered, the user identification unit identifies the user by checking both the face image and the clothing information.

Further, it is desired that the clothing information management unit should update the registered clothing information each time the clothing information of the user is acquired on the same day as the clothing information was registered.

### Advantageous Effect of Invention

According to the present invention, a queuing situation can be checked smoothly without using a receipt number issued at the time of queue registration.

### Brief Description of Drawings

Fig. 1 is a diagram illustrating a schematic configuration of a queue management system 1000 according to an embodiment of the present invention.
Fig. 2 is a block diagram illustrating a main configuration of a queue management terminal 200.
Fig. 3 is a flowchart of queue reception registration processing in the queue management system 1000 according to the embodiment of the present invention.
Fig. 4 is a flowchart of queuing situation inquiry processing in the queue management system 1000 according to the embodiment of the present invention.
Fig. 5 is a flowchart of second and subsequent queue reception registration processing in the queue management system 1000 according to the embodiment of the present invention.

### Description of Embodiment

An embodiment of the present invention will be described in detail below with reference to the accompanying drawings. Note that the same element is given the same reference numeral to omit redundant description.

In the embodiment, an example of queue management at a shopping mall in which many restaurants and stores are gathered will be described, but the present invention can also be applied to other kinds of facilities at which a queue of users using the facilities is managed, such as clinics, banks, government offices, department stores, amusement facilities, and event sites.

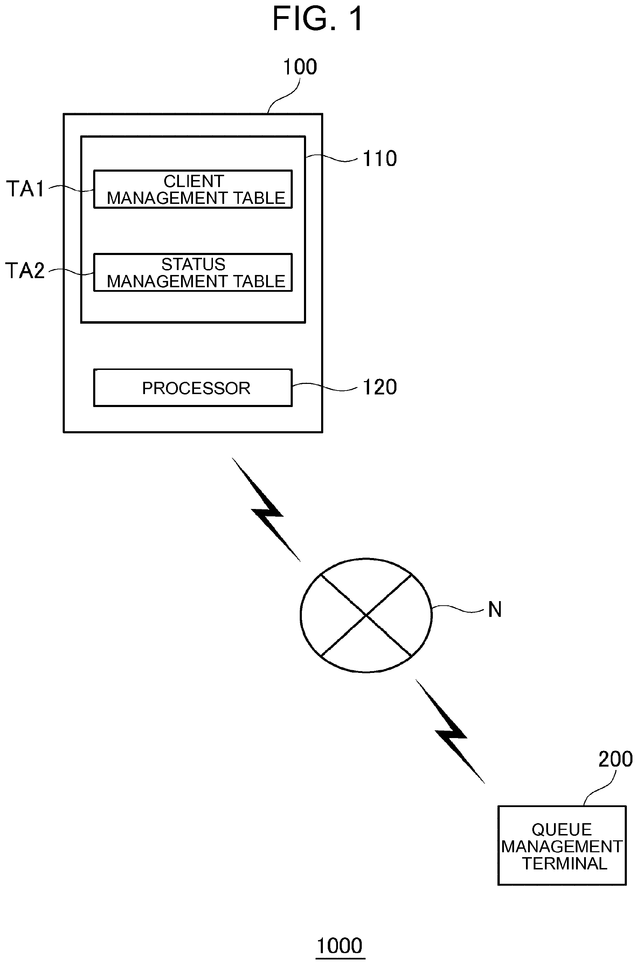

Fig. 1 is a diagram illustrating a schematic configuration of a queue management system 1000 according to the embodiment. As illustrated in Fig. 1, the queue management system 1000 includes a queue management server 100 installed in a control center or the like, and a queue management terminal 200. The queue management server 100 is connected to the queue management terminal 200 through a communication network N.

The queue management server 100 manages a queue to be registered through the queue management terminal 200 for each facility. In the example of Fig. 1, although only the queue management terminal 200 for one facility is illustrated, the queue management server 100 is actually connected to queue management terminals 200 placed in a plurality of facilities through the communication network to manage the queue at each facility. The queue management server 100 is configured by a general-purpose computer to run a predetermined server program on the computer so as to implement the server function. The computer constituting the queue management server 100 is not necessarily one computer, and the queue management server 100 may also be composed of a plurality of computers distributed in the communication network N.

The queue management server 100 includes a management database (waiting list storage unit) 110 for managing the queue management terminal 200 for each facility, and a processor (registration acceptance unit, face image information management unit, user identification unit, queuing situation presenting unit, clothing information management unit) 120. The management database 110 includes a client management table TA1 and a status management table TA2.

In the client management table TA1, unique ID and passcode (account) assigned to the queue management terminal 200 is registered for each facility. For example, as a record of "shopping mall A," "ID: A1...," "passcode: AA2...," and the like are set. These pieces of information are set, for example, at the time of system introduction by an administrator (for example, the owner of each facility) who conducts queue management at each facility. When two or more queue management terminals 200 are used at one facility, the same ID and passcode may be used, or two or more IDs and passcodes may be used separately, for example, according to a predetermined condition(s).

In the status management table TA2, a waiting list at each facility is registered. This waiting list includes a list of people waiting their turn (groups waiting their turn) and information (status information) indicative of waiting status of each waiting group. One record of the waiting list includes information, such as Receipt Number "1," Reception Time "13:03," and Status "Call." In addition, the name and information such as the e-mail address or telephone number as contact information can also be included. Information on the face image of each user is further registered in association with each record in the waiting list.

The information on the face image is information on an image captured with an equipped camera when the user stood in front of the queue management terminal 200 at the time of reception registration. Specifically, feature point information extracted from the captured face image is registered. The extraction of the feature point information from the face image can be done by using existing technology. As the feature point information, for example, the coordinates of feature points such as eyes, eyebrows, and nose, and information on the distance between feature points are included. The face image information is managed in association with the receipt number. Further, the face image information may also be managed in association with the registered name and email address or telephone number as contact information.

Included in the status are "Waiting" as a state of a person before his/her turn comes, "Calling" as a state after letting a person know that his/her turn has come, "Guided" as a state of a person guided into the site after his/her turn came, "Canceled" as a state of a person who canceled the queue, and the like. The administrator of each facility or the like can set and change accordingly what item is set as the status.

Note that the administrator of each facility or the like can set and change information included in the waiting list accordingly. The content of the waiting list is updated based on new registration information to the waiting list and status update information (to be described in detail later) sent from the queue management terminal 200.

A processor 120 is composed of an arithmetic logic unit (such as a CPU) which processes arithmetic operations, logic operations, bit operations, and the like, and various registers to execute various programs stored in a storage means such as a ROM in order to control each unit of the queue management server 100 centrally. The processor 120 also executes a computer program (queue management application) to manage a queue in cooperation with the queue management terminal 200.

The communication network N includes a communication network(s) capable of mutually sending and receiving information between the queue management server 100 and the queue management terminal 200, and the like. The communication network N may be, for example, any of the Internet, LAN, a dedicated line, a telephone line, a corporate network, a mobile communication network, Bluetooth (registered trademark), WiFi (Wireless Fidelity), other communication networks, or combination thereof, and it does not matter whether the connection is wired or wireless.

As the queue management terminal 200, any terminal device capable of exchanging data with the queue management server 100 through the communication network N can be used, such as a tablet terminal, a personal computer (PC), a laptop PC, a smartphone, a mobile phone, or a personal digital assistant (PDA). Note that two or more queue management terminals 200 can also be used at one facility.

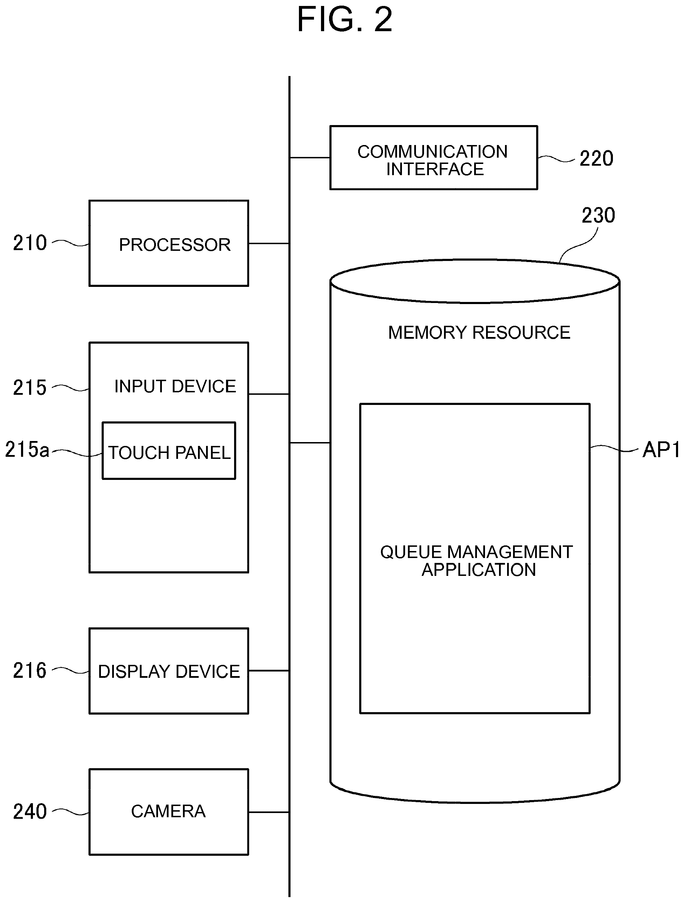

Fig. 2 is a block diagram illustrating a main configuration of the queue management terminal 200. The queue management terminal 200 includes a processor (queuing situation presenting unit) 210, an input device 215, a display device 216, a communication interface 220, a memory resource 230, and a camera (face image acquisition unit) 240. The queue management terminal 200 accepts input such as registration or updating to the waiting list by a user or an employee of the facility directly operating the input device 215 such as a touch panel. For example, the employee of the facility performs input to register a new queue in the waiting list or to update the status registered in the waiting list.

The processor 210 is composed of an arithmetic logic unit (such as a CPU) which processes arithmetic operations, logic operations, bit operations, and the like, and various registers to execute various programs stored in the memory resource 230 in order to control each unit of the queue management terminal 200 centrally. The various registers are, for example, a program counter, a data register, an instruction register, a general-purpose register, and the like.

The input device 215 includes various operation buttons and a touch panel 215a to accept input such as reception into the waiting list, deletion from the waiting list, and the like.

The display device 216 is a device for displaying the waiting list, a reception screen, or a status management screen, which is configured, for example, by a liquid crystal display.

The communication interface 220 is a hardware module connected to the communication network N to perform communication with other devices through the communication network N. The communication interface 220 is a modulator/demodulator such as an ISDN modem, an ADSL modem, a cable modem, an optical modem, or a software modem.

The memory resource 230 is a logical device provided, for example, by a memory area of a physical device. The physical device is, for example, a computer-readable recording medium such as a disk drive or a semiconductor memory (such as a ROM or a RAM). The memory resource 230 may be constructed by mapping two or more physical devices into one logical device, or by mapping one physical device into two or more logical devices.

In the memory resource 230, an operating system program, driver programs, various data, and the like are stored. As the driver programs, for example, there are a communication interface driver program for controlling the communication interface 220, and the like. In addition to these various programs and various data, a computer program (queue management application) AP1 executed by the processor 210 to manage a queue in cooperation with the queue management server 100 is stored in the memory resource 230.

The camera 240 automatically captures a face image of each user who stands in front of the queue management terminal 200, and sends face image data to the queue management server 100.

### (Queue Reception Registration)

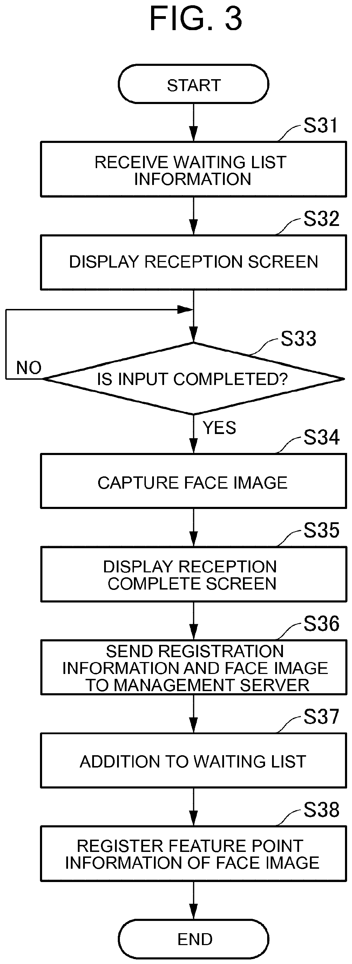

Next, queue reception registration processing will be described with reference to a flowchart in Fig. 3.

The queue management terminal 200 receives information included in the waiting list registered in the status management table TA2 from the queue management server 100 through the communication interface 220 (step S31).

Next, the queue management terminal 200 displays, on the display device 216, a reception screen for reception of a queue (step S32). On the reception screen, for example, waiting list information (receipt numbers of persons waiting their turn and current status information) is displayed as a list chronologically in order of reception. In addition, the number of groups currently waiting their turn and the like are also displayed.

When each user performs predetermined operation input to the displayed reception screen and input of information (a waiting item, an email address or telephone number as contact information, and the like) necessary for queue reception is completed (step S33: YES), a face image of the user is captured with the camera 240 (step S34). Note that a message saying that "a face image is registered" or the like may be displayed on the screen or output by voice before capturing the face image. Alternatively, a capture button may be displayed on the screen to capture an image when the user presses the capture button.

Further, the queue management terminal 200 displays a reception complete screen (step S35). On the reception complete screen, a receipt number (queue number), a waiting time at present, and the like are displayed. Further, a message for urging the user to receive a queue ticket is so displayed that the user can receive the queue ticket printed out from a printer connected to the queue management terminal 200.

On the queue ticket, a two-dimensional code associated with the receipt number is printed. The user uses the mobile terminal carried by the user to read the two-dimensional code printed on the queue ticket so as to display a current waiting situation (the number of currently waiting groups, the waiting time, and the like) on a display device of the mobile terminal. Further, the user may enter an email address according to a guidance displayed by reading the two-dimensional code so that a message can be received when the user's turn has come or a reminder email can be received when the user's turn approaches.

New registration information and a face image confirmed are sent from the queue management terminal 200 to the queue management server 100 through the communication network N (step S36). When receiving new registration information from a facility, the queue management server 100 performs processing for newly adding one waiting group to the waiting list of the facility based on the new registration information received to update the status management table TA2 (step S37). Further, the queue management server 100 extracts feature point information from the acquired face image, and stores the feature point information in association with the receipt number of the waiting group concerned (step S38). Note that the extraction of feature points from the face image may be done on the queue management terminal 200 so that the feature point information will be sent to the queue management server 100.

### (Updating of Waiting List)

The content of each record of the waiting list of each facility is updated when an employee of the facility performs an operation such as "Cancel," "Change," "Call," "Guide," or the like using the queue management terminal 200. "Cancel" means canceling the queue, and "Change" means changing the content of the queue once input. Further, "Call" means a state of speaking to a group whose turn has come or letting the group know it over the phone or by a calling email, and "Guide" means a state of starting actually taking care of a group whose turn came.

From the waiting list displayed on the queue management terminal 200, the employee selects a waiting group to be updated, and performs an update operation of any one of "Call," "Cancel," and "Change" to the selected waiting group. Information for identifying the waiting group to be updated (for example, the receipt number "1") and information on the update operation (for example, "Call") are uploaded from the queue management terminal 200 to the queue management server 100 through the communication network N. The queue management server 100 updates the waiting list of the facility based on the received information. For example, when the "Call" operation is performed on the receipt number "1," the status of the waiting group with the receipt number "1" is updated to "Calling."

### (Inquiry About Queuing Situation)

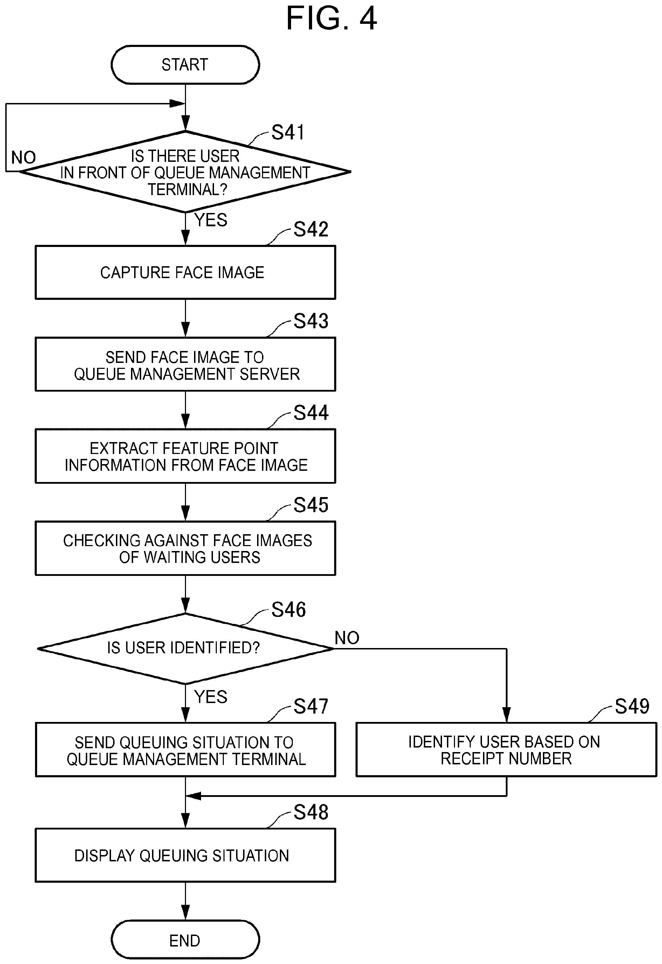

Before being called, each waiting user registered in a queue can use the queue management terminal 200 to check on the queuing situation (a waiting time at present, the number of waiting groups, and the like). Queuing situation inquiry processing will be described with reference to a flowchart in Fig. 4.

First, when the user stands in front of the queue management terminal 200 (step S41: YES), a face image of the user is captured with the camera 240 (step S42).

Next, the captured face image is sent from the queue management terminal 200 to queue management server 100 through the communication network N (step S43). When acquiring the face image, the queue management server 100 extracts feature point information from the acquired face image (step S44). Further, the queue management server 100 checks the extracted feature point information against feature point information on face images of waiting users registered in the waiting list (step S45). As a result of checking, when a user matching in terms of the feature point information is identified (step S46: YES), the queuing situation of the identified user is sent to the queue management terminal 200 (step S47). The queue management terminal 200 displays, on the display device 216, the received queuing situation information (step S48). Note that, when checking in step S46 is unsuccessful and no user is identified (step S46: NO), a message for urging the user to enter a receipt number on the screen of the queue management terminal 200, and the queue management server 100 sends the queue management terminal 200 a queuing situation of the user concerned based on the entered receipt number (step S49).

As described above, according to the embodiment, information on the face image of each user is acquired and registered at the time of queue registration, and when a queuing situation is inquired, the face image of a user who stands in front of the camera of the queue management terminal 200 is checked against information on face images of people waiting their turn at the facility to present information on the queuing situation to the user identified. This allows the user to check on the queuing situation smoothly by doing nothing other than standing in front of the camera without the need to present the receipt number issued at the time of registration. Further, since the queue management server 100 has only to check the face image of the user who is making the inquiry against face images of users waiting their turn at the time at the facility (users whose status is "waiting"), the load on checking processing can be minimized.

### (Second and Subsequent Queue Reception Registration)

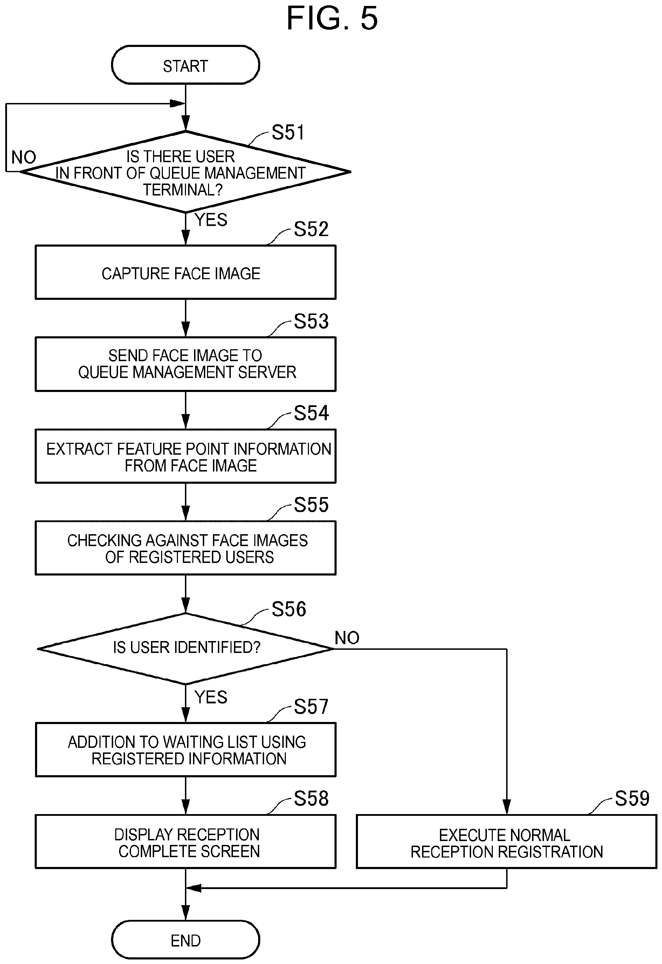

Since feature information on each face image registered at the time of reception registration and other input information (name, email address, telephone number, and the like) are held in association with each other, information on each user identified by the face image can be used to register information necessary for reception automatically upon queue reception registration at the same facility. This processing will be described with reference to a flowchart in Fig. 5.

First, when a user stands in front of the queue management terminal 200 (step S51: YES), a face image of the user is captured with the camera 240 (step S52).

Next, the captured face image is sent from the queue management terminal 200 to the queue management server 100 through the communication network N (step S53). When acquiring the face image, the queue management server 100 extracts feature point information from the acquired face image (step S54). Further, the queue management server 100 checks the extracted feature point information against feature point information on face images of users registered in the management database 110 (step S55). When the user matching as a result of checking in terms of feature point information is identified (step S56: YES), the queue management server 100 performs a process of adding one new group to the waiting list of the facility using registered information of the identified user (name, email address, telephone number, and the like) to update the status management table TA2 (step S57). Further, the reception complete screen is displayed on the queue management terminal 200 (step S58). On the reception complete screen, a receipt number (queue number), a waiting time at present, and the like are displayed. When the checking in step S56 is unsuccessful so that the user cannot be identified (step S56: NO), a normal reception screen is displayed on the queue management terminal 200 to perform reception registration processing (step S59).

As described above, since face image information and user registration information are held in association with each other, a user can be identified as a result of checking a face image of the user upon later reception registration to input necessary information automatically. This not only enables the user to save time and effort to perform the same input operation many times, but also shortens the processing time of the system to make the reception registration efficient. Further, misregistration due to a user input error can be avoided. This is effective particularly at facilities at which people are very likely to wait their turn plural times, such as being put in queues at plural stores in a shopping mall and being put in queues for plural attractions in an amusement facility.

Note that it may also enable each user to preregister a face image and user information (name, email address, telephone number, and the like) using a mobile terminal of the user. In this case, input of necessary items can be omitted after the time of first reception registration.

### (Use of Clothing Information)

Upon reception registration, user's clothing information can also be acquired together with a face image to improve the accuracy of identification of the user. The clothing information includes the clothing color, the presence or absence of glasses, the presence or absence of a hat/cap, and the like. Specifically, upon reception registration, the camera 240 captures a clothing image (which may be an image of partial clothing) together with the face image, and sends image data to the queue management server 100. Based on the image data, the queue management server 100 extracts information on the clothing color (for example, color information on the largest area) and information on whether the glasses and/or the hat/cap is worn or not. These pieces of information can be extracted by using existing image recognition technology. The extracted clothing information is stored together with the face image information in association with the receipt number of the waiting group.

The registered clothing information is used together with the face image information to identify the user upon inquiry about the queuing situation and at the time of the second reception registration or later. The queue management server 100 identifies the user when both the feature point information on the face image and the clothing information match in terms of the captured data acquired from the queue management terminal 200. Since the clothing of the user is very likely to change as the date changes, it is desired that the clothing information should be used only on the same day as the registration day. Further, when the user concerned makes an inquiry about the queuing situation or at the time of the second and subsequent reception registration of the user on the same day as the image was registered, it is desired that the queue management server 100 should update the clothing information using captured image data acquired from the queue management terminal 200. In this case, it is possible to respond to a change in clothing, and hence the accuracy of identifying the user can further be improved.

As described above, since each user is identified by using clothing feature information together with the feature information on the face image, the accuracy of identifying the user can be improved. Further, since these pieces of information can be acquired together at one shot, the processing accuracy can be improved without increasing the amount of data.

Note that the present invention is not limited to the above-described embodiment, and the present invention can be carried out in various other forms without departing from the scope of the present invention. Thus, the aforementioned embodiment is just an illustrative example in all aspects and not intended to limit the present invention. For example, respective processing steps described above can be changed in order arbitrarily or executed in parallel as long as the processing content does not create any contradiction.

### Reference Signs List

- 1000: queue management system
- 100: queue management server
- 110: management database
- 120: processor
- 200: queue management terminal
- 210: processor
- 215: input device
- 215a: touch panel
- 216: display device
- 220: communication interface
- 230: memory resource
- 240: camera
- TA1: client management table
- TA2: status management table
- N: communication network
- AP1: queue management application

## Claims

1. A queue management system configured to manage a queue of users waiting their turn at a facility, comprising:
a registration acceptance unit which accepts a queue registration at the facility;
a waiting list storage unit which holds information on a queuing situation of a registered group waiting their turn;
a face image acquisition unit which acquires a face image of a user whose turn is registered in a queue upon the queue registration;
a face image information management unit which extracts face image feature information from the face image, and manages the extracted information in association with information of the user whose turn is registered in the queue;
a user identification unit which acquires a face image of a user who makes an inquiry about the queuing situation to check the face image of the user against all face images managed in association with information of users in the queue in order to identify the user; and
a queuing situation presenting unit which presents information on the queuing situation to the identified user.

2. The queue management system according to claim 1, wherein when a face image of a user whose turn is to be newly registered is registered in association with information of the user whose turn has been registered in the past, the registration acceptance unit registers a new queue using the information of the user.

3. The queue management system according to claim 1 or 2, further comprising
a clothing information management unit which acquires clothing information of a user whose turn is registered in the queue upon the queue registration, and manages the clothing information in association with information of the user,
wherein upon inquiry about the queuing situation on the same day as the clothing information was registered, the user identification unit identifies the user by checking both the face image and the clothing information.

4. The queue management system according to claim 3, wherein the clothing information management unit updates the registered clothing information each time the clothing information of the user is acquired on the same day as the clothing information was registered.

5. A queue management device configured to manage a queue of users waiting their turn at a facility, comprising:
a registration acceptance unit which accepts a queue registration at the facility;
a waiting list storage unit which holds information on a queuing situation of a registered group waiting their turn;
a face image information management unit which acquires a face image of a user whose turn is registered in a queue upon the queue registration, extracts face image feature information from the face image, and manages the extracted information in association with information of the user whose turn is registered in the queue;
a user identification unit which acquires a face image of a user who makes an inquiry about the queuing situation to check the face image of the user against all face images managed in association with information of users in the queue in order to identify the user; and
a queuing situation presenting unit which presents information on the queuing situation to the identified user.

6. A program causing a computer configured to manage a queue at a facility to function as:
a registration acceptance unit which accepts a queue registration at the facility;
a waiting list storage unit which holds information on a queuing situation of a registered group waiting their turn;
a face image information management unit which acquires a face image of a user whose turn is registered in a queue upon the queue registration, extracts face image feature information from the face image, and manages the extracted information in association with information of the user whose turn is registered in the queue;
a user identification unit which acquires a face image of a user who makes an inquiry about the queuing situation to check the face image of the user against all face images managed in association with information of users in the queue in order to identify the user; and
a queuing situation presenting unit which presents information on the queuing situation to the identified user.
